(19) Europäisches Patentamt
European Patent Office
Office européen des brevets

(11) EP 2 982 726 B1

(12) # EUROPEAN PATENT SPECIFICATION

(45) Date of publication and mention of the grant of the patent:
**27.02.2019 Bulletin 2019/09**

(21) Application number: **14773206.9**

(22) Date of filing: **26.03.2014**

(51) Int Cl.:
***C09J 133/06*** (2006.01) ***B32B 27/00*** (2006.01)
***C08F 2/24*** (2006.01) ***C09J 7/00*** (2018.01)
***C09J 9/00*** (2006.01) ***C09J 171/02*** (2006.01)
***B32B 7/12*** (2006.01) ***B32B 7/06*** (2019.01)
***B32B 7/08*** (2019.01) ***C09J 5/00*** (2006.01)
***C09J 133/08*** (2006.01)

(86) International application number:
**PCT/JP2014/058670**

(87) International publication number:
**WO 2014/157406 (02.10.2014 Gazette 2014/40)**

(54) **ELECTRICALLY PEELABLE ADHESIVE COMPOSITION, ELECTRICALLY PEELABLE ADHESIVE SHEET, AND METHOD FOR USING ELECTRICALLY PEELABLE ADHESIVE SHEET**

ELEKTRISCH ABZIEHBARE HAFTZUSAMMENSETZUNG, ELEKTRISCH ABZIEHBARE KLEBEFOLIE UND VERFAHREN ZUR VERWENDUNG DER ELEKTRISCH ABZIEHBAREN KLEBEFOLIE

COMPOSITION ADHÉSIVE PELABLE DE FAÇON ÉLECTRIQUE, FEUILLE ADHÉSIVE PELABLE DE FAÇON ÉLECTRIQUE ET PROCÉDÉ D’UTILISATION DE FEUILLE ADHÉSIVE PELABLE DE FAÇON ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2013 JP 2013067219**

(43) Date of publication of application:
**10.02.2016 Bulletin 2016/06**

(73) Proprietor: **LINTEC Corporation**
**Tokyo 173-0001 (JP)**

(72) Inventors:
- **YAMADA, Haruya**
  **Tokyo 173-0001 (JP)**
- **KATO, Kiichiro**
  **Tokyo 173-0001 (JP)**
- **HATANAKA, Tomio**
  **Tokyo 173-0001 (JP)**
- **SUGINO, Takashi**
  **Tokyo 173-0001 (JP)**
- **KAWADA, Satoshi**
  **Tokyo 173-0001 (JP)**

(74) Representative: **Gille Hrabal**
**Brucknerstrasse 20**
**40593 Düsseldorf (DE)**

(56) References cited:
**EP-A1- 1 595 929** **EP-A1- 2 562 226**
**WO-A1-2011/132565** **WO-A1-2011/132566**
**WO-A1-2013/058182** **JP-A- 2006 241 419**
**JP-A- 2010 037 355**

- **DATABASE WPI Week 201015 Thomson Scientific, London, GB; AN 2010-B81323 XP002759553, & JP 2010 037355 A (YOKOHAMA RUBBER CO LTD) 18 February 2010 (2010-02-18)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 982 726 B1

## Description

[Technical Field]

The present invention relates to an electrically peelable pressure sensitive adhesive composition whose adhesiveness can be decreased by applying a voltage, and an electrically peelable pressure sensitive adhesive sheet having a pressure sensitive adhesive layer formed of a material comprising the pressure sensitive adhesive composition, and a method for using the electrically peelable pressure sensitive adhesive sheet.

[Background Art]

As one of the properties of pressure sensitive adhesive sheets, peelability is required in some cases, for example, in applications such as surface protection films, masking tapes for coating or for decoration, and peelable notes.
When such pressure sensitive adhesive sheets are stuck to adherends, adhesion by which the pressure sensitive adhesive sheets do not peel from the adherends is required during transport, during storage, during processing, and the like. On the other hand, it is required that the pressure sensitive adhesive sheets can be easily peeled and removed after they complete serving their function.
As pressure sensitive adhesives used in such pressure sensitive adhesive sheets, pressure sensitive adhesives whose adhesion decreases by applying a voltage are known.
For example, Patent Literature 1 discloses an electrochemically debondable adhesive comprising a high load resistant bonding polymer having high mechanical strength and comprising an electrolyte.
In addition, Patent Literature 2 discloses an electropeeling composition comprising an ionic liquid as a pressure sensitive adhesive peelable during voltage application. Patent Literature 2 states that the ionic liquid is a molten salt that is a liquid at room temperature, has no vapor pressure, and has properties such as high heat resistance, nonflammability, and high chemical stability.
Patent Literature 3 discloses an electrically peelable pressure sensitive adhesive composition consisting of an emulsion type acrylic pressure sensitive adhesive (A) comprising an acrylic polymer (A1) obtained by emulsion polymerization in the presence of an ammonium salt using a monomer mixture comprising an alkyl (meth)acrylate, and a (poly)alkylene polyol (B) having a number average molecular weight of 200-6000, wherein a content of the component (B) based on 100 parts by mass of active ingredient of the component(A) is 1-40 parts by mass or more.

[Citation List]

[Patent Literature]

[PTL 1]
JP-A 2003-129030
[PTL 2]
WO2007/018239
[PTL 3]
JP2010037355

[Summary of Invention]

[Technical Problem]

However, when a pressure sensitive adhesive sheet is provided using the adhesive disclosed in Patent Literature 1, a time of about 10 to 15 minutes is required to peel the pressure sensitive adhesive sheet from an adherend, and therefore, the workability is poor.
In addition, the ionic liquid contained in the composition disclosed in Patent Literature 2 is a compound having a special structure as described in the literature and therefore has a high price, and it is difficult to provide an inexpensive pressure sensitive adhesive tape using them. Further, a pressure sensitive adhesive sheet using the composition disclosed in Patent Literature 2 still has room for improvement in the decrease rate of adhesion between before and after voltage application.
It is an object of the present invention to provide an electrically peelable pressure sensitive adhesive composition whose adhesiveness before voltage application is high, but can be effectively decreased by voltage application for a

short time, and an electrically peelable pressure sensitive adhesive sheet having a pressure sensitive adhesive layer formed of a material comprising the pressure sensitive adhesive composition, and a method for using an electrically peelable pressure sensitive adhesive sheet.

[Solution to Problem]

It is found out that an electrically peelable pressure sensitive adhesive composition containing a particular amount of a (poly)alkylene polyol having a particular number average molecular weight together with an emulsion type acrylic pressure sensitive adhesive comprising an acrylic polymer obtained by emulsion polymerization in the presence of a surfactant can solve the above problems.

Specifically, the present invention provides the following [1] to [13].

[1] An electrically peelable pressure sensitive adhesive consisting of an emulsion type acrylic pressure sensitive adhesive (A) comprising an aqueous dispersion comprising an emulsion of an acrylic polymer (A1) obtained by emulsion polymerization in the presence of a surfactant using a monomer mixture comprising an alkyl (meth)acrylate, and a (poly)alkylene polyol (B) having a number average molecular weight of 2000 or less, wherein
a content of the component (B) is 3.5 parts by mass or more based on 100 parts by mass of active ingredient of the component(A).

[2] The electrically peelable pressure sensitive adhesive composition according to the above [1], wherein the content of the component (B) is 3.5 to 50 parts by mass based on 100 parts by mass of active ingredient of the component (A).

[3] The electrically peelable pressure sensitive adhesive composition according to the above [1] or [2], wherein the component (B) comprises a (poly)alkylene glycol.

[4] The electrically peelable pressure sensitive adhesive composition according to the above [3], wherein the (poly)alkylene glycol is a compound represented by the following general formula (b-1):

[Chem. 1]

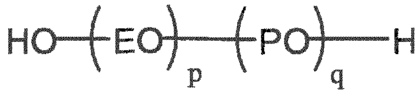

(b-1)

wherein EO represents ethylene oxide, PO represents propylene oxide, and p and q are real numbers satisfying $p \geq 0$, $q \geq 0$, and $p + q \geq 1$; and when the compound represented by general formula (b-1) is a copolymer of EO and PO, the compound may be a compound formed by block copolymerization or a compound formed by random copolymerization.

[5] The electrically peelable pressure sensitive adhesive composition according to any of the above [1] to [4], wherein the component (A1) is an acrylic copolymer comprising 60 to 99.9% by mass of a constituent unit (a1) derived from an alkyl (meth)acrylate, and 0.1 to 40% by mass of a constituent unit (a2) derived from a functional group-containing unsaturated monomer.

[6] The electrically peelable pressure sensitive adhesive composition according to any of the above [1] to [5], wherein the surfactant is an anionic reactive emulsifier.

[7] The electrically peelable pressure sensitive adhesive composition according to the above [6], wherein the anionic reactive emulsifier is an ammonium salt.

[8] An electrically peelable pressure sensitive adhesive sheet comprising a pressure sensitive adhesive layer formed of a material comprising the electrically peelable pressure sensitive adhesive composition according to any of the above [1] to [7].

[9] The electrically peelable pressure sensitive adhesive sheet according to the above [8], wherein a water content of the pressure sensitive adhesive layer measured by Karl Fischer method is 0.53 to 15.0%.

[10] The electrically peelable pressure sensitive adhesive sheet according to the above [8] or [9], comprising the pressure sensitive adhesive layer on at least one face of an electrically conductive substrate.

[11] The electrically peelable pressure sensitive adhesive sheet according to the above [8] or [9], having a configuration in which the pressure sensitive adhesive layer is sandwiched between two release sheets.

[12] The electrically peelable pressure sensitive adhesive sheet according to any of the above [8] to [11], wherein when a voltage is applied between faces on both sides of the pressure sensitive adhesive layer sandwiched between two adherends or an adherend and a substrate, peeling occurs between a face of the pressure sensitive adhesive layer connected to a cathode side and the adherend or the substrate in contact with the face.

[13] A method for using an electrically peelable pressure sensitive adhesive sheet, comprising sticking the electrically peelable pressure sensitive adhesive sheet according to any of the above [8] to [12] to an adherend having electrical

conductivity.

[Advantageous Effects of Invention]

In the electrically peelable pressure sensitive adhesive composition of the present invention, the adhesiveness before voltage application is high, but the adhesiveness can be effectively decreased by voltage application for a short time. Therefore, the electrically peelable pressure sensitive adhesive sheet of the present invention having a pressure sensitive adhesive layer formed of a material comprising the pressure sensitive adhesive composition can achieve both excellent adhesion and electrical peelability.

[Brief Description of Drawings]

Fig. 1 shows cross-sectional views of the electrically peelable pressure sensitive adhesive sheets of the present invention showing examples of the configurations of the pressure sensitive adhesive sheets.

Fig. 2 relates to the electrically peelable pressure sensitive adhesive sheet of the present invention and shows diagrams showing the difference between (a) the pressure sensitive adhesive sheet before voltage application and (b) the pressure sensitive adhesive sheet after voltage application.

Fig. 3 relates to the electrically peelable pressure sensitive adhesive sheet of the present invention and shows diagrams showing the difference between (a) the pressure sensitive adhesive sheet before voltage application and (b) the pressure sensitive adhesive sheet after voltage application.

[Description of Embodiments]

In the present invention, for example, "(meth)acrylic acid" is a term indicating both "acrylic acid" and "methacrylic acid," and a "(poly)alkylene polyol" is used as a term indicating both a "polyalkylene polyol" and an "alkylene polyol." The same applies to other similar terms.

In addition, in the present invention, "active ingredient" means ingredients excluding ingredients that do not directly or indirectly affect a reaction or physical properties, such as water and organic solvents remaining in a pressure sensitive adhesive composition, and specifically means ingredients other than water and organic solvents.

[Electrically Peelable Pressure Sensitive Adhesive Composition]

The electrically peelable pressure sensitive adhesive composition (hereinafter also simply referred to as a "pressure sensitive adhesive composition") of the present invention consists of an emulsion type acrylic pressure sensitive adhesive (A) (hereinafter also simply referred to as "the pressure sensitive adhesive (A) " or "the component (A) ") comprising an acrylic polymer (A1) (hereinafter also simply referred to as "the polymer (A1)") obtained by emulsion polymerization in the presence of a surfactant using a monomer mixture comprising a (meth)acrylate, and a (poly)alkylene polyol (B) (hereinafter also referred to as "the component (B) ") having a number average molecular weight of 2000 or less.

The components contained in the pressure sensitive adhesive composition of the present invention will be described below.

< component (A) : Emulsion Type Acrylic Pressure Sensitive Adhesive (A)>

The emulsion type acrylic pressure sensitive adhesive (A) contained in the pressure sensitive adhesive composition of the present invention comprises aqueous dispersion comprising an emulsion of an acrylic polymer (A1) obtained by emulsion polymerization in the presence of a surfactant using a monomer mixture comprising a (meth) acrylate.

In the pressure sensitive adhesive (A), in addition to the polymer (A1), a surfactant, a polymerization initiator, a chain transfer agent, a pH buffer, used during the synthesis of the polymer (A1) may be contained, and general-purpose additives such as a cross-linking agent, a tackifying resin, and a wetting agent may be further contained.

The content of the polymer (A1) in the pressure sensitive adhesive (A) is preferably 70 to 99% by mass, more preferably 80 to 97% by mass, and further preferably 85 to 95% by mass based on the total amount (100% by mass) of active ingredients constituting the pressure sensitive adhesive (A).

[Component (A1) : Acrylic Polymer (A1)]

The polymer (A1) is obtained by emulsion polymerization in the presence of a surfactant using a monomer mixture comprising an alkyl (meth)acrylate. (hereinafter also referred to as "the monomer (a1)") and therefore comprises at least a constituent unit (a1) derived from an alkyl (meth)acrylate.

The polymer (A1) may be a polymer comprising only the constituent unit (a1) but is preferably an acrylic copolymer comprising a constituent unit (a2) derived from a functional group-containing unsaturated monomer (hereinafter also referred to as the monomer (a2)) together with the constituent unit (a1).

In addition, the acrylic copolymer may be a copolymer comprising a constituent unit (a3) derived from another monomer (hereinafter also referred to as "the monomer (a3)") other than the monomers (a1) and (a2).

When the polymer (A1) is a copolymer, the form of copolymerization is not particularly limited, and the copolymer may be any of a random copolymer, a block copolymer, and a graft copolymer.

In the present invention, the polymer (A1) may be used singly, or two or more polymers (A1) may be used in combination.

(Monomer (a1) and Constituent Unit (a1))

Examples of the monomer (a1) include methyl (meth)acrylate, ethyl (meth)acrylate, propyl (meth)acrylate, isopropyl (meth)acrylate, butyl (meth)acrylate, pentyl (meth)acrylate, hexyl (meth)acrylate, heptyl (meth)acrylate, 2-ethylhexyl (meth)acrylate, octyl (meth)acrylate, nonyl (meth)acrylate, decyl (meth)acrylate, tridecyl (meth)acrylate, and stearyl (meth)acrylate.

These monomers (a1) may be used singly, or two or more of these monomers (a1) may be used in combination.

Among these, from the viewpoint of an improvement in the adhesion of the obtained pressure sensitive adhesive composition before voltage application, alkyl (meth)acrylates having an alkyl group having 4 to 12 carbon atoms are preferred, and alkyl (meth)acrylates having an alkyl group having 4 to 8 carbon atoms are more preferred.

Specifically, as a preferred monomer (a1), one or more selected from butyl (meth)acrylate, pentyl (meth)acrylate, hexyl (meth)acrylate, heptyl (meth)acrylate, and 2-ethylhexyl (meth)acrylate are preferred, and one or more selected from butyl (meth)acrylate and 2-ethylhexyl (meth)acrylate are more preferred, and 2-ethylhexyl (meth)acrylate is further preferred.

The content of the constituent unit (a1) in the polymer (A1) is preferably 60 to 99.9% by mass, more preferably 75 to 99.6% by mass, further preferably 85 to 99.3% by mass, and still further preferably 95 to 99.0% by mass based on all constituent units of the polymer (A1) (100% by mass).

When the content of the constituent unit (a1) is 60% by mass or more, the adhesiveness of the obtained pressure sensitive adhesive composition before voltage application can be good. In addition, when the content is 99.9% by mass or less, the content of the constituent unit (a2) derived from the monomer (a2) described above can be ensured, and the cohesion can be improved, and the electrical peelability of a pressure sensitive adhesive sheet using the obtained pressure sensitive adhesive composition can be good.

The content of a constituent unit derived from an alkyl (meth)acrylate having an alkyl group having 4 to 12 carbon atoms in the polymer (A1) is preferably 50 to 99.9% by mass, more preferably 60 to 99.6% by mass, and further preferably 70 to 99.0% by mass based on all constituent units of the polymer (A1) (100% by mass) from the viewpoint of an improvement in the adhesiveness of the obtained pressure sensitive adhesive composition before voltage application.

(Monomer (a2) and Constituent Unit (a2))

The functional group-containing unsaturated monomer, the monomer (a2), is a compound having a functional group and one or more double bonds in the molecule. The functional group of the monomer (a2) is a cross-linking point of a cross-linking reaction, and the cohesion can be improved, and the electrical peelability of a pressure sensitive adhesive sheet using the obtained pressure sensitive adhesive composition can be improved.

Examples of the monomer (a2) include carboxy group-containing unsaturated monomers, hydroxyl group-containing unsaturated monomers, and epoxy group-containing unsaturated monomers.

Examples of the carboxy group-containing unsaturated monomers include ethylenic unsaturated monocarboxylic acids such as (meth)acrylic acid and crotonic acid; ethylenic unsaturated dicarboxylic acids such as fumaric acid, itaconic acid, maleic acid, and citraconic acid; and 2-carboxylethyl (meth)acrylate.

Examples of the hydroxyl group-containing unsaturated monomers include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, and glycerin di(meth)acrylate.

Examples of the epoxy group-containing unsaturated monomers include glycidyl (meth)acrylate.

These monomers (a2) may be used singly, or two or more of these monomers (a2) may be combined.

Among these, from the viewpoint of versatility and the viewpoint of an improvement in the adhesion of a pressure sensitive adhesive sheet using the obtained pressure sensitive adhesive composition, carboxy group-containing unsaturated monomers are preferred, ethylenic unsaturated monocarboxylic acids are more preferred, and (meth)acrylic acid is further preferred. When the fact that a carboxyl group plays a role as a cross-linking point is also considered, acrylic acid is still further preferred from the viewpoint that the carboxy group that is the cross-linking point is easily oriented in the emulsion particle surface layer.

The content of the constituent unit (a2) in the polymer (A1) is preferably 0.1 to 40% by mass, more preferably 0.4 to 25% by mass, further preferably 0.7 to 10% by mass, and still further preferably 1.0 to 5% by mass based on all constituent units of the polymer (A1) (100% by mass) from the viewpoint of improvements in the adhesion and electrical peelability of a pressure sensitive adhesive sheet using the obtained pressure sensitive adhesive composition.

When the content of the constituent unit (a2) is 0.1% by mass or more, cross-linking bonds can be sufficiently formed with a cross-linking agent to improve the cohesion, and thus the electrical peelability of a pressure sensitive adhesive sheet using the obtained pressure sensitive adhesive composition can be improved. On the other hand, when the content of the constituent unit (a2) is 40% by mass or less, the content of the constituent unit (a1) derived from the monomer (a1) can be ensured, and therefore, the adhesion of the pressure sensitive adhesive sheet can be good.

The polymer (A1) may be a copolymer further having the constituent unit (a3) derived from another monomer (a3) other than the monomers (a1) and (a2).

Examples of the another monomer include olefins such as ethylene, propylene, and isobutylene, halogenated olefins such as vinyl chloride and vinylidene chloride, diene-based monomers such as butadiene, isoprene, and chloroprene, styrene, α-methylstyrene, vinyltoluene, vinyl formate, vinyl acetate, acrylonitrile, (meth)acrylamide, (meth)acrylonitrile, (meth)acryloylmorpholine, and N-vinylpyrrolidone.

The content of the constituent unit (a3) in the polymer (A1) is preferably 0 to 20% by mass, more preferably 0 to 10% by mass, further preferably 0 to 5% by mass, and still further preferably 0 to 2% by mass based on all constituent units of the polymer (A1) (100% by mass).

(Method for Synthesizing Acrylic Polymer (A1))

In the present invention, the polymer (A1) can be obtained by emulsion polymerization in the presence of a surfactant using a monomer mixture comprising the above-described monomers as a raw material.

As the surfactant used, from the viewpoint of obtaining a pressure sensitive adhesive composition whose adhesiveness after voltage application can be effectively decreased, anionic reactive emulsifiers are preferred, and anionic reactive emulsifiers that are ammonium salts are more preferred. In the present invention, the ammonium salts refer to salts having a cation represented by $NH_4^+$, and quaternary ammonium salts are not encompassed in the ammonium salts.

The anionic reactive emulsifiers are reactive anionic emulsifiers containing a functional group including an ethylenic unsaturated double bond. Examples thereof include compounds represented by the following general formulas (1) to (11):

[Chem. 2]

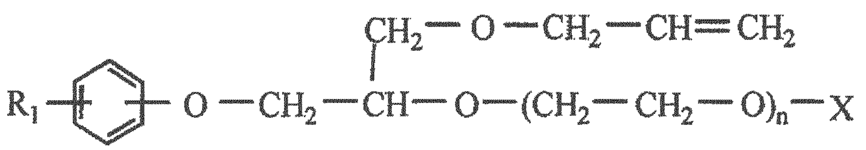
(1)

[Chem. 3]

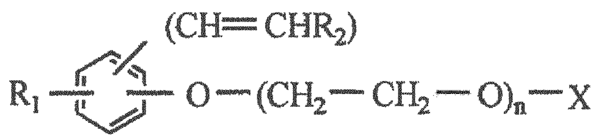
(2)

[Chem. 4]

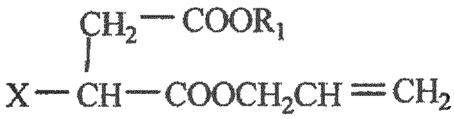

(3)

[Chem. 5]

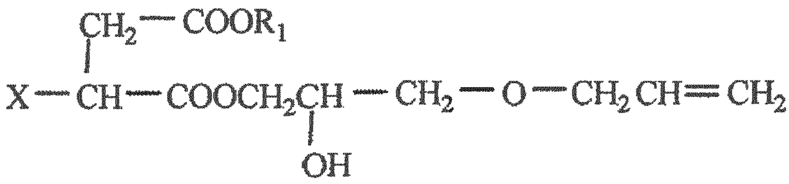

(4)

[Chem. 6]

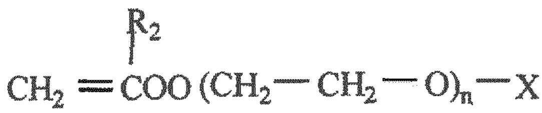

(5)

[Chem. 7]

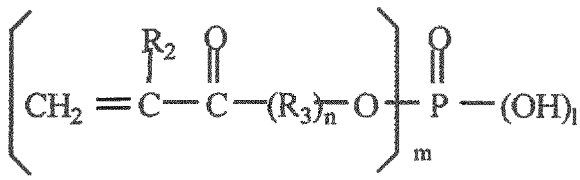

(6)

[Chem. 8]

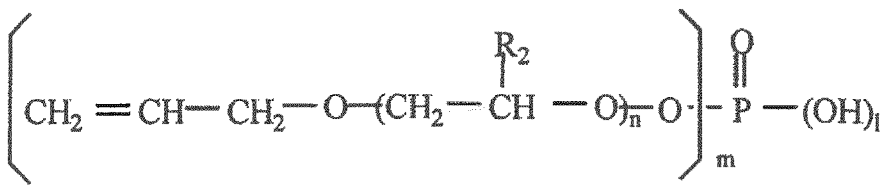

(7)

[Chem. 9]

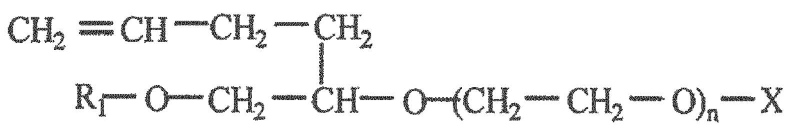

(8)

[Chem. 10]

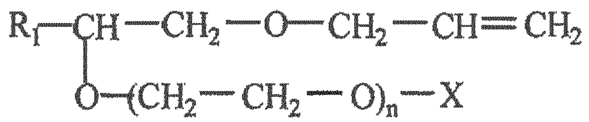

(9)

[Chem. 11]

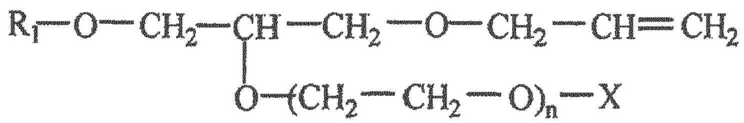

(10)

[Chem. 12]

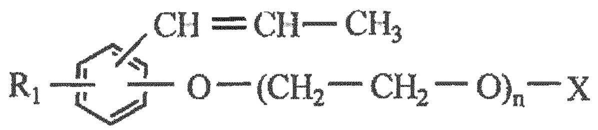

(11)

In the above general formulas (1) to (11), $R_1$ represents an alkyl group, $R_2$ represents a hydrogen atom or a methyl group, $R_3$ represents an alkylene group, n is an integer of 1 or more, and m and 1 are integers of 1 or more and satisfy m + l = 3.

In addition, X is each independently a group represented by $-SO_3NH_4$ or a group represented by $-SO_3Na$ and is preferably a group represented by $-SO_3NH_4$ from the viewpoint of obtaining a pressure sensitive adhesive composition whose adhesiveness after voltage application can be effectively decreased.

In addition, among the anionic reactive emulsifiers represented by the above formulas (1) to (11), from the viewpoint of environmental safety, anionic reactive emulsifiers having no alkylphenol structure are preferred, and the compounds represented by the above general formulas (3), (4), (5), (8), (9), and (10) are more preferred.

Examples of commercial products of the anionic reactive emulsifiers represented by the above general formulas (1) to (11) include ADEKA REASOAP SE-20N, ADEKA REASOAP SE-10N, ADEKA REASOAP PP-70, ADEKA REASOAP PP-710, ADEKA REASOAP SR-10, and ADEKA REASOAP SR-20 (product names, manufactured by ADEKA CORPORATION), ELEMINOL JS-2 and ELEMINOL RS-30 (product names, manufactured by Sanyo Chemical Industries, Ltd.), LATEMUL S-180A, LATEMUL S-180, and LATEMUL PD-104 (product names, manufactured by Kao Corporation), AQUALON BC-05, AQUALON BC-10, AQUALON BC-20, AQUALON HS-05, AQUALON HS-10, AQUALON HS-20, NEW FRONTIER S-510, AQUALON KH-05, and AQUALON KH-10 (product names, manufactured by DKS Co. Ltd.), and PHOSPHANOL TX (manufactured by TOHO CHEMICAL INDUSTRY Co., Ltd.).

These anionic reactive emulsifiers may be used singly, or two or more of these anionic reactive emulsifiers may be used in combination.

The amount of the surfactant used is preferably 0.5 to 10 parts by mass, more preferably 0.8 to 7 parts by mass, and further preferably 1 to 4 parts by mass based on 100 parts by mass of the monomer mixture.

When the amount of the surfactant used is 0.5 parts by mass or more, the emulsion polymerization can be allowed to proceed stably. On the other hand, when the amount of the surfactant used is 10 parts by mass or less, harmful effects such as decreases in adherence to substrate, water whitening resistance, and the adhesion and electrical peelability of a pressure sensitive adhesive sheet using the obtained pressure sensitive adhesive composition due to the remaining of the unreacted surfactant can be prevented.

The surfactant may be added to an emulsion comprising the monomer mixture, previously added to a polymerization container, or added after polymerization, or these may be combined.

The polymerization initiator added in the emulsion polymerization is not particularly limited and may be either water-soluble or oil-soluble.

Examples of such a polymerization initiator include organic peroxides such as alkyl peroxides, t-butyl hydroperoxide, cumene hydroperoxide, p-methane hydroperoxide, lauroyl peroxide, 3,5,5-trimethylhexanoyl peroxide, octanoyl peroxide, t-butylcumyl peroxide, benzoyl peroxide, dichlorobenzoyl peroxide, dicumyl peroxide, di-t-butyl peroxide, 1,1-bis(t-butylperoxy)-3,3,5-trimethylcyclohexane, 3,3,5-trimethylcyclohexanone peroxide, methylcyclohexanone peroxide, di-isobutyl peroxydicarbonate, di-2-ethylhexyl peroxydicarbonate, and t-butyl peroxyisobutyrate, 2,2'-azobisisobutyronitrile, dimethyl-2,2'-azobisisobutyrate, 2,2'-azobis(2,4-dimethylvaleronitrile), 2,2'-azobis(2-methylbutyronitrile), potassium persulfate, sodium persulfate, ammonium persulfate, hydrogen peroxide, an ammonium (amine) salt of 4,4'-azobis-4-cyanovaleric acid, 2,2'-azobis(2-methylamidoxime) dihydrochloride, 2,2'-azobis(2-methylbutaneamidoxime) dihydrochloride tetrahydrate, 2,2'-azobis{2-methyl-N-[1,1-bis(hydroxymethyl)-2-hydroxyethyl]-propionamide}, 2,2'-azobis[2-methyl-N-(2-hydroxyethyl)-propionamide], and various redox catalysts (in this case, as the oxidant, ammonium persulfate, potassium persulfate, sodium persulfate, hydrogen peroxide, t-butyl hydroperoxide, benzoyl peroxide, cumene hydroperoxide, p-methane hydroperoxide are used, and as the reducing agent, sodium sulfite, acidic sodium sulfite, Rongalile, ascorbic acid are used).

These polymerization initiators may be used singly, or two or more of these polymerization initiators may be used in combination.

Among these, from the viewpoint of excellent polymerization stability, ammonium persulfate, potassium persulfate, sodium persulfate, redox catalysts (examples of the oxidant used include ammonium persulfate, potassium persulfate, and sodium persulfate, and examples of the reducing agent used include sodium sulfite and acidic sodium sulfite), are preferred.

The amount of the polymerization initiator added is preferably 0.01 to 5 parts by mass, more preferably 0.03 to 3 parts by mass, and further preferably 0.1 to 2 parts by mass based on 100 parts by mass of the monomer mixture from the viewpoint of increasing the polymerization rate.

These polymerization initiators may be previously added into a polymerization container, added immediately before the initiation of polymerization, or added a plurality of times after the initiation of polymerization. In addition, the polymerization initiator may be previously added to the monomer mixture, or after an emulsion comprising the mixture is prepared, the polymerization initiator may be added to the emulsion.

In the addition, the polymerization initiator may be separately dissolved in a solvent or the monomer mixture and added, or the dissolved polymerization initiator may be further emulsified and added.

In addition, during the polymerization, a chain transfer agent may be further added.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol.

These chain transfer agents may be used singly, or two or more of these chain transfer agents may be used in combination.

The amount of the chain transfer agent added is preferably 0.01 to 2 parts by mass, more preferably 0.05 to 1 part by mass, based on 100 parts by mass of the monomer mixture.

In addition, during the polymerization, a pH buffer may be further added from the viewpoint of pH adjustment.

The pH buffer is not particularly limited as long as it is a compound having pH buffer action. Examples thereof include sodium hydrogen carbonate, potassium hydrogen carbonate, monosodium phosphate, monopotassium phosphate, disodium phosphate, trisodium phosphate, sodium acetate, ammonium acetate, sodium formate, and ammonium formate.

In the emulsion polymerization, as the water used, ion-exchanged water is preferred.

The amount of water used is preferably 30 to 400 parts by mass, more preferably 35 to 200 parts by mass, and further preferably 40 to 150 parts by mass based on 100 parts by mass of the monomer mixture.

When the amount of water used is 30 parts by mass or more, the viscosity of the pressure sensitive adhesive (A) comprising the polymer (A1) can be in a moderate range. In addition, the polymerization stability of the obtained polymer (A1) is also good.

On the other hand, when the amount of water used is 400 parts by mass or less, the concentration of active ingredient of the obtained pressure sensitive adhesive composition can be in a moderate range, and thus the coating film-forming properties when a substrate or a release sheet is coated with the pressure sensitive adhesive composition to form a coating film are good.

As the method for synthesizing the polymer (A1), a method of using a monomer mixture and adding a polymerization initiator in the presence of a surfactant to allow emulsion polymerization to proceed is preferred.

Examples of the procedure when the emulsion polymerization is performed include the following methods of (1) to (3). From the viewpoint of easy control of polymerization temperature, the method of (2) or (3) is preferred.

(1) The total amount of a monomer mixture, a surfactant, water, and the like is charged and heated, and the total amount of a polymerization initiator dissolved in water is dropped or a polymerization initiator dissolved in water is added dividedly for polymerization.

(2) Water, a surfactant, and a part of a monomer mixture are charged into a reaction container and heated, then a polymerization initiator dissolved in water is dropped or added dividedly to allow a polymerization reaction to proceed, and then the total amount of the remaining monomer mixture is dropped or the remaining monomer mixture is added dividedly to continue the polymerization.

(3) A polymerization initiator dissolved in water is charged into a reaction container and heated, and then the total amount of an emulsion comprising a monomer mixture, a surfactant, and water is dropped or an emulsion comprising a monomer mixture, a surfactant, and water is added dividedly for polymerization.

The polymerization conditions in the above polymerization methods are not particularly limited.

For example, in the method of (1), the temperature range is preferably 40 to 100°C, and it is preferred that the polymerization reaction be performed in about 1 to 8 hours after the start of heating.

In the method of (2), it is preferred that 1 to 50% by mass of the monomer mixture be polymerized at 40 to 90°C in 0.1 to 4 hours, then the total amount of the remaining monomer mixture be dropped over about 1 to 5 hours or the remaining monomer mixture be added dividedly, and then the mixture be aged at the same temperature for about 1 to 3 hours.

In the method of (3), it is preferred that the polymerization initiator dissolved in water be preferably heated to 40 to 90°C, and all of the emulsion comprising a monomer mixture, a surfactant, and water be dropped over about 2 to 5 hours or the emulsion comprising a monomer mixture, a surfactant, and water be added dividedly. In addition, thereafter, it is preferred that the mixture be aged at the same temperature for about 1 to 3 hours.

In the above polymerization methods, from the viewpoint of polymerization stability, it is preferred that the surfactant (or a part of the surfactant) be dissolved in the monomer mixture, or the monomer mixture be previously brought into a state of an O/W type emulsion.

The preparation of the above emulsion can be performed by mixing components and using HOMOGENIZING DISPER, or a stirring apparatus to which a stirring blade such as a paddle blade is attached. The temperature during the emulsification is unproblematic as long as it is such a temperature that the mixture does not react during the emulsification. The temperature during the emulsification is preferably 5 to 60°C.

In addition, by adding an aqueous solution of an alkali such as, ammonia water, various water-soluble amines, an aqueous solution of sodium hydroxide, or an aqueous solution of potassium hydroxide for adjustment to pH 5 to 9, preferably pH 6 to 8, the polymer (A1) is obtained.

The above aqueous solution of an alkali can be added during the polymerization or after the completion of the polymerization. However, from the viewpoint of polymerization stability and the viscosity stability of the obtained emulsion over time, it is preferred that the whole or a part of the above aqueous solution of an alkali be added after cooling to room temperature (25°C) at the aging stage during the polymerization.

The concentration of active ingredient of the aqueous dispersion comprising the emulsion of the polymer (A1) obtained as described above is preferably 10 to 80% by mass, more preferably 25 to 70% by mass, and further preferably 45 to 65% by mass.

In addition, the average particle diameter of the emulsion of the polymer (A1) is preferably 100 to 900 nm, more preferably 200 to 600 nm, and further preferably 300 to 500 nm.

The concentration of active ingredient of the aqueous dispersion and the average particle diameter of the emulsion of the polymer (A1) described above mean values measured by methods described in Examples.

[Cross-Linking Agent]

The pressure sensitive adhesive (A) may further contain a cross-linking agent in addition to the polymer (A1).

The cross-linking agent is a compound that is cross-linked to a functional group when the polymer (A1) has the functional group.

Examples of the cross linking agent include epoxy-based cross-linking agents, oxazoline-based cross-linking agents, carbodiimide-based cross-linking agents, aziridine-based cross-linking agents, polyisocyanate-based cross-linking agents, melamine-based cross-linking agents, metal complex-based cross-linking agents, amine-based cross-linking agents, and hydrazine derivatives such as adipic acid dihydrazide and sebacic acid dihydrazide.

These cross-linking agents may be used singly, or two or more of these cross-linking agents may be used in combination.

The cross-linking agent is preferably added after the polymer (A1) is obtained.

The content of the cross-linking agent is preferably 0.1 to 20 parts by mass, more preferably 0.5 to 15 parts by mass, and further preferably 1 to 10 parts by mass based on 100 parts by mass of active ingredient of the polymer (A1).

[Tackifying Resin]

The pressure sensitive adhesive (A) preferably further contains a tackifying resin in addition to the polymer (A1) from the viewpoint of further improving the adhesiveness of the obtained pressure sensitive adhesive composition before voltage application.
Examples of the tackifying resin include rosin-based resins such as rosin resins, rosin phenol resins, and rosin ester resins; hydrogenated rosin-based resins obtained by hydrogenating these rosin-based resins; terpene-based resins such as terpene-based resins, terpene phenol-based resins, and aromatic modified terpene-based resins; hydrogenated terpene-based resins obtained by hydrogenating these terpene-based resins; C5-based petroleum resins obtained by copolymerizing C5 fractions such as pentene, isoprene, piperine, and 1,3-pentadiene produced by the thermal cracking of petroleum naphtha, and hydrogenated petroleum resins of these C5-based petroleum resins; and C9-based petroleum resins obtained by copolymerizing C9 fractions such as indene, vinyltoluene, $\alpha$-methylstyrene, and $\beta$-methylstyrene produced by the thermal cracking of petroleum naphtha, and hydrogenated petroleum resins of these C9-based petroleum resins.
These tackifying resins may be added after the polymer (A1) is obtained, or these tackifying resins may be blended together with the monomer mixture before the polymer (A1) is obtained, to undergo the polymerization reaction. However, these tackifying resins are preferably blended together with the monomer mixture.
The softening point of the tackifying resin is preferably 60 to 170°C, more preferably 75 to 150°C, further preferably 85 to 140°C, and still further preferably 90 to 130°C from the viewpoint of further improving the adhesiveness of the obtained pressure sensitive adhesive composition before voltage application.
The value of the softening point of the tackifying resin is a value measured according to JIS K 2531.
The content of the tackifying resin is preferably 1 to 40 parts by mass, more preferably 2 to 30 parts by mass, further preferably 3 to 20 parts by mass, and still further preferably 4 to 15 parts by mass based on 100 parts by mass of active ingredient of the polymer (A1) or 100 parts by mass of the monomer mixture that is a raw material of the polymer (A1).

[General-Purpose Additives]

The pressure sensitive adhesive (A) used in the present invention may contain general-purpose additives other than the above in a range that does not impair the effects of the present invention.
Examples of the general-purpose additives include plasticizers, wetting agents, thickening agents, antifoaming agents, antioxidants, ultraviolet absorbing agents, softeners (plasticizers), fillers, rust preventives, pigments, and dyes.
These general-purpose additives are preferably added after the polymer (A1) is obtained.
Examples of the plasticizers include adipic acid diesters, fumaric acid diesters, and sebacic acid diesters.
Examples of the wetting agents include anionic surfactants, nonionic surfactants, acrylic compounds, silicone-based compounds, fluorine-based compounds, and water-soluble alcohols.
Examples of the thickening agents include polyacrylic acid-based thickening agents, polyvinyl-based thickening agents, polyether-based thickening agents, polyglycol-based thickening agents, polyamide-based thickening agents, polyester-based thickening agents, hydrophobized cellulose ester-based thickening agents, urethane-based thickening agents, and polycarboxylic acid-based thickening agents.
Examples of the antifoaming agents include silicone-based antifoaming agents and polyether-based antifoaming agents.
When the general-purpose additives are added, the content of each general-purpose additive is preferably 0.01 to 10 parts by mass, more preferably 0.05 to 5 parts by mass, and further preferably 0.1 to 3 parts by mass based on 100 parts by mass of active ingredient of the polymer (A1).

< component (B) : (Poly)alkylene Polyol>

The pressure sensitive adhesive composition of the present invention contains the (poly)alkylene polyol (B) having a number average molecular weight of 2000 or less.
When the number average molecular weight of the component (B) is more than 2000, it is difficult to sufficiently decrease the adhesiveness of the obtained pressure sensitive adhesive composition after voltage application, and the electrical peelability of a pressure sensitive adhesive sheet using the pressure sensitive adhesive composition tends to be poor.
Therefore, the number average molecular weight of the component (B) is preferably 100 to 2000, more preferably 120 to 1600, more preferably 140 to 1300, further preferably 180 to 1000, further preferably 250 to 900, and still further preferably 320 to 760 from the viewpoint of obtaining a pressure sensitive adhesive composition whose adhesiveness after voltage application can decrease effectively.

The number average molecular weight (Mn) of the component (B) is a value in terms of standard polystyrene measured by a gel permeation chromatography (GPC) method and is specifically a value measured based on a method described in Examples.

Examples of the (poly)alkylene polyol that is the component (B) include polyalkylene glycols such as polyethylene glycol, polypropylene glycol, polybutylene glycol, and polyethylene polypropylene glycol; alkylene glycols or diols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylolheptane, diethylene glycol, and triethylene glycol; and polyhydric alcohols such as triols such as glycerin and trimethylolpropane.

These (poly)alkylene polyols may be used singly, or two or more of these (poly)alkylene polyols may be used in combination.

Among these, as the component (B), from the viewpoint of obtaining a pressure sensitive adhesive composition whose adhesiveness after voltage application can be effectively decreased, a (poly)alkylene glycol is preferably contained, and one or more selected from polyethylene glycol, triethylene glycol, diethylene glycol, and ethylene glycol are more preferably contained.

The content of the (poly)alkylene glycol in the component (B) is preferably 50 to 100% by mass, more preferably 70 to 100% by mass, further preferably 85 to 100% by mass, and still further preferably 95 to 100% by mass based on the total amount (100% by mass) of the component (B) from the same viewpoint as the above.

As the (poly)alkylene glycol used in the present invention, from the viewpoint of obtaining a pressure sensitive adhesive composition whose adhesiveness after voltage application can be effectively decreased, a compound represented by the following general formula (b-1) is preferred, and polyethylene glycol is more preferred.

[Chem. 13]

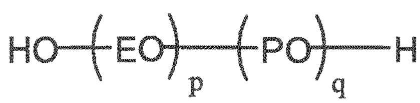

(b-1)

In the above general formula (b-1), EO represents ethylene oxide, and PO represents propylene oxide. p and q are real numbers satisfying $p \geq 0$, $q \geq 0$, and $p + q \geq 1$. When the compound represented by general formula (b-1) is a copolymer of EO and PO, the compound may be a compound formed by block copolymerization or a compound formed by random copolymerization.

The values of p and q are preferably values adjusted so that the number average molecular weight of the compound represented by the above general formula (b-1) falls within the above-described range.

In the present invention, the content of the component (B) is 3.5 parts by mass or more based on 100 parts by mass of active ingredient of the component(A). When the content of the component (B) is less than 3.5 parts by mass, the adhesiveness of the obtained pressure sensitive adhesive composition after voltage application does not decrease sufficiently, and the electrical peelability of a pressure sensitive adhesive sheet using the pressure sensitive adhesive composition tends to be poor.

The content of the component (B) is preferably 3.5 to 200 parts by mass based on 100 parts by mass of active ingredient of the component(A), more preferably 3.5 to 100 parts by mass, more preferably 3.5 to 50 parts by mass, more preferably 5 to 45 parts by mass, further preferably 7 to 40 parts by mass, further preferably 9 to 37 parts by mass, further preferably 15 to 35 parts by mass, and still further preferably 20 to 32 parts by mass from the viewpoint of obtaining a pressure sensitive adhesive composition whose adhesion after voltage application can be effectively decreased, and the viewpoint of keeping the adhesiveness of the obtained pressure sensitive adhesive composition before voltage application well.

[Electrically Peelable Pressure Sensitive Adhesive Sheet]

The electrically peelable pressure sensitive adhesive sheet (hereinafter also simply referred to as a "pressure sensitive adhesive sheet") of the present invention has a pressure sensitive adhesive layer formed of a material comprising the electrically peelable pressure sensitive adhesive composition of the present invention described above.

The material forming the pressure sensitive adhesive layer may comprise, for example, a (poly)alkylene polyol having a number average molecular weight of more than 2000, which does not apply to the component (B), in addition to the electrically peelable pressure sensitive adhesive composition of the present invention in a range that does not inhibit the effects of the present invention.

The content of the electrically peelable pressure sensitive adhesive composition of the present invention based on the total amount (100% by mass) of the material forming the pressure sensitive adhesive layer excluding water is preferably 90 to 100% by mass, more preferably 95 to 100% by mass, further preferably 98 to 100% by mass, and still further preferably 100% by mass.

The configuration of the pressure sensitive adhesive sheet of the present invention is not particularly limited as long as it has a pressure sensitive adhesive layer formed of a material comprising the pressure sensitive adhesive composition of the present invention. The pressure sensitive adhesive sheet of the present invention may be a pressure sensitive adhesive sheet having a pressure sensitive adhesive layer on at least one face of a substrate, or a pressure sensitive adhesive sheet having a configuration in which a pressure sensitive adhesive layer is sandwiched between two release sheets.

Fig. 1 shows cross-sectional views of electrically peelable pressure sensitive adhesive sheets , which show the configurations of the electrically peelable pressure sensitive adhesive sheet of the present invention.

Examples of specific configurations of the pressure sensitive adhesive sheet of the present invention include a substrate-attached electrically peelable pressure sensitive adhesive sheet 1a having a pressure sensitive adhesive layer 3 on one face of a substrate 2 as shown in Fig. 1 (a).

In addition, examples of specific configurations of the pressure sensitive adhesive sheet of the present invention also include a substrate-attached electrically peelable pressure sensitive adhesive sheet 1b having a pressure sensitive adhesive layer 3 and a pressure sensitive adhesive layer 3' on both faces of a substrate 2 as shown in Fig. 1 (b), and a substrate-attached electrically peelable pressure sensitive adhesive sheet 1c in which a release sheet 4 is further laminated on a pressure sensitive adhesive layer 3 formed on one face of a substrate 2 as shown in Fig. 1 (c). In the electrically peelable pressure sensitive adhesive sheet 1b, release sheets may be further provided on the pressure sensitive adhesive layers 3 and 3'.

In addition, the configuration of the pressure sensitive adhesive sheet of the present invention may be a substrate-free electrically peelable pressure sensitive adhesive sheet 1d having a configuration in which a pressure sensitive adhesive layer 3 is sandwiched between two release sheets 4 and 4' without using a substrate as shown in Fig. 1 (d).

The materials of the release sheets 4 and 4' of this electrically peelable pressure sensitive adhesive sheet 1d may be the same or different but are preferably materials adjusted so that the peel strength of the release sheet 4 and the peel strength of the release sheet 4' are different.

Examples of other configurations of the pressure sensitive adhesive sheet of the present invention also include an electrically peelable pressure sensitive adhesive sheet having a configuration in which a pressure sensitive adhesive layer provided on one face of a release sheet whose surface is release-treated is rolled in a roll shape.

In addition, in the pressure sensitive adhesive sheet of the present invention, when a voltage is applied between the faces on both sides of the pressure sensitive adhesive layer sandwiched between two adherends or an adherend and a substrate, peeling occurs between the face of the pressure sensitive adhesive layer connected to the negative electrode side and the adherend or the substrate in contact with the face.

In other words, a case where an attempt is made to peel the electrically peelable pressure sensitive adhesive sheet 1a of the present invention from an adherend 11 as shown in (a) of Fig. 2 is considered. In this Fig. 2 (a), a pressure sensitive adhesive layer 3 is sandwiched between the adherend 11 and a substrate 2a, and an voltage can be applied from both faces of the pressure sensitive adhesive layer 3 by connecting the positive electrode terminal 51 of a voltage application apparatus 50 to the substrate 2a and connecting a negative electrode terminal 52 to the adherend 11.

When the substrate-free electrically peelable pressure sensitive adhesive sheet 1d as shown in (d) of Fig. 1 is used, the configuration of the "substrate 2a" in Fig. 2 is another "adherend," and a configuration in which the pressure sensitive adhesive layer 3 is sandwiched between two adherends is provided, and an voltage can be applied from both faces of the pressure sensitive adhesive layer 3 by connecting the positive electrode terminal 51 and the negative electrode terminal 52 of the voltage application apparatus 50 to the respective adherends.

When a voltage is applied in the state shown in this (a) of Fig. 2, the adhesion decreases between the face 3a of the pressure sensitive adhesive layer connected to the negative electrode side and the adherend 11 in contact with the face 3a of the pressure sensitive adhesive layer connected to the negative electrode side, and the electrically peelable pressure sensitive adhesive sheet 1a can be easily peeled from the adherend, as shown in (b) of Fig. 2.

In addition, on the contrary, when the negative electrode terminal and the positive electrode terminal are connected reversely to those of Fig. 2 as shown in (a) of Fig. 3, the adhesion decreases between the face 3a' of the pressure sensitive adhesive layer connected to the negative electrode side and the substrate 2a in contact with the face 3a' of the pressure sensitive adhesive layer connected to the negative electrode side, and the substrate 2a is peeled from the pressure sensitive adhesive layer 3.

The voltage applied (applied voltage) is preferably 10 to 200 V, more preferably 40 to 140 V, and further preferably 70 to 120 V, and the time of applying a voltage in the range (application time) is preferably 1 to 180 seconds, more preferably 5 to 120 seconds, and further preferably 10 to 90 seconds.

Generally, the larger the applied voltage is, the shorter the application time is, and on the other hand, the smaller

the applied voltage is, the longer the application time is. For example, when the applied voltage is 10 to 50 V, peeling is possible with an application time of 30 to 300 seconds.

The water content of the pressure sensitive adhesive layer of the electrically peelable pressure sensitive adhesive sheet of the present invention calculated by the Karl Fischer method is preferably 0.53 to 15.0%, more preferably 0.54 to 6.50%, more preferably 0.55 to 2.50%, further preferably 0.60 to 2.20%, and still further preferably 0.70 to 1.90%.

When the water content is within the above range, the adhesion of the pressure sensitive adhesive layer can be effectively decreased by voltage application, and a pressure sensitive adhesive sheet having excellent electrical peelability can be provided.

The above water content of the pressure sensitive adhesive layer calculated by the Karl Fischer method means a value measured by a method described in Examples.

The adhesion of the pressure sensitive adhesive sheet of the present invention before voltage application is preferably 3.0 N/25 mm or more, more preferably 5.0 N/25 mm or more, and further preferably 6.5 N/25 mm or more.

In addition, the decrease rate of the adhesion of the pressure sensitive adhesive sheet of the present invention after voltage application is preferably 20% or more, more preferably 30% or more, further preferably 50% or more, and still further preferably 70% or more.

The adhesion of the pressure sensitive adhesive sheet of the present invention before voltage application and the decrease rate of the adhesion of the pressure sensitive adhesive sheet of the present invention after voltage application mean values measured by methods described in Examples.

The thickness of the pressure sensitive adhesive layer of the pressure sensitive adhesive sheet of the present invention is appropriately adjusted according to the application and the like and is preferably 0.5 to 120 μm, more preferably 1 to 100 μm, and further preferably 3 to 60 μm.

When the thickness of the pressure sensitive adhesive layer is 0.5 μm or more, good adhesion can be exhibited regardless of the type of the adherend. On the other hand, when the thickness of the pressure sensitive adhesive layer is 120 μm or less, an electrically peelable pressure sensitive adhesive sheet that has an advantage in terms of productivity and is also good in terms of handling properties can be provided.

The substrate of the pressure sensitive adhesive sheet of the present invention is preferably an electrically conductive substrate because when it is desired to peel the pressure sensitive adhesive sheet from an adherend, a voltage is applied to the pressure sensitive adhesive layer of the pressure sensitive adhesive sheet.

Examples of the material constituting the electrically conductive substrate include metals such as aluminum, tin-doped indium oxide, copper, iron, silver, platinum, and gold and alloys of these metals.

In addition, a metal deposited body obtained by depositing the above metal on a film of a resin such as polyethylene terephthalate may be used as the substrate. When a metal is deposited on a resin film, the metal is preferably deposited on the face of the resin film in contact with the pressure sensitive adhesive layer.

The thickness of the substrate is preferably 5 to 300 μm, more preferably 10 to 150 μm, and further preferably 20 to 100 μm.

The release sheet used in the pressure sensitive adhesive sheet of the present invention can be obtained by coating one face or both faces of a release sheet substrate with a release agent.

Examples of the release sheet substrate include films of resins such as polyesters such as polyethylene terephthalate, polybutylene terephthalate, and polyethylene naphthalate, polyethylene, polypropylene, polybutene, polybutadiene, polymethylpentene, polyvinyl chloride, vinyl chloride copolymers, polyurethanes, ethylene-vinyl acetate copolymers, ionomer resins, ethylene (meth)acrylic acid copolymers, polystyrene, polycarbonates, fluororesins, low density polyethylene, linear low density polyethylene, and triacetyl cellulose, substrates of paper such as wood-free paper, coated paper, and glassine paper, and laminated paper obtained by laminating thermoplastic resins such as polyethylene on these paper substrates.

Examples of the release agent used include rubber-based elastomers such as silicone-based resins, olefin-based resins, long chain alkyl-based resins, alkyd-based resins, fluorine-based resins, isoprene-based resins, and butadiene-based resins.

The thickness of the release sheet is not particularly limited but is preferably 5 to 300 μm, more preferably 10 to 200 μm. When a polyethylene terephthalate-based film is used as the release sheet substrate, the thickness of the release sheet is preferably 10 to 100 μm.

[Method for Manufacturing Electrically Peelable Pressure Sensitive Adhesive Sheet]

The method for manufacturing the electrically peelable pressure sensitive adhesive sheet of the present invention is not particularly limited, and the electrically peelable pressure sensitive adhesive sheet of the present invention can be manufactured by coating the above-described substrate or release sheet by a known coating method with an aqueous dispersion of a pressure sensitive adhesive composition prepared by the above method.

The concentration of active ingredient of the aqueous dispersion of the pressure sensitive adhesive composition

is preferably 10 to 80% by mass, more preferably 25 to 70% by mass, and further preferably 45 to 65% by mass.

Examples of the method for coating the substrate or the release sheet with the aqueous dispersion of the pressure sensitive adhesive composition include a spin coating method, a spray coating method, a bar coating method, a knife coating method, a roll coating method, a blade coating method, a die coating method, and a gravure coating method.

After the substrate or the release sheet is coated with the aqueous dispersion of the pressure sensitive adhesive composition to form a coating film, drying treatment is preferably performed.

As the drying conditions of the formed coating film, from the viewpoint of adjusting the water content of the formed pressure sensitive adhesive layer calculated by the Karl Fischer method in the above-described range, the coating film is preferably heated and dried at a temperature of 80°C to 150°C for 30 seconds to 5 minutes (preferably for 40 seconds to 3 minutes, more preferably for 45 seconds to 2 minutes). A pressure sensitive adhesive layer can be formed on the substrate or the release sheet through this drying step.

Examples of specific manufacturing methods classified by the configuration of the electrically peelable pressure sensitive adhesive sheet include the following methods.

First, the electrically peelable pressure sensitive adhesive sheet 1a having the pressure sensitive adhesive layer 3 on one face of the substrate 2 as shown in Fig. 1 (a) can be fabricated, for example, by directly coating one face of the substrate 2 with the above-described aqueous dispersion of the pressure sensitive adhesive composition to form the pressure sensitive adhesive layer 3.

In addition, the electrically peelable pressure sensitive adhesive sheet 1a may be fabricated by directly coating the release-treated face of a release sheet with the above-described aqueous dispersion of the pressure sensitive adhesive composition to form the pressure sensitive adhesive layer 3, then bonding the pressure sensitive adhesive layer 3 and the substrate 2 together, and removing the release sheet.

The electrically peelable pressure sensitive adhesive sheet 1b having the pressure sensitive adhesive layers 3 and 3' on both faces of the substrate 2 as shown in Fig. 1 (b) can be fabricated, for example, by directly coating both faces of the substrate 2 with the above-described aqueous dispersion of the pressure sensitive adhesive composition to form the pressure sensitive adhesive layers 3 and 3'.

In addition, the electrically peelable pressure sensitive adhesive sheet 1b may be fabricated by providing two pressure sensitive adhesive layers each formed by directly coating the release-treated face of a release sheet with the above-described aqueous dispersion of the pressure sensitive adhesive composition, bonding the respective pressure sensitive adhesive layers to both faces of the substrate 2, and removing the release sheets.

The electrically peelable pressure sensitive adhesive sheet 1c having the pressure sensitive adhesive layer 3 and the release sheet 4 in this order on the substrate 2 as shown in Fig. 1 (c) can be fabricated, for example, by laminating the release sheet 4 on the face of the pressure sensitive adhesive layer 3 of the electrically peelable pressure sensitive adhesive sheet 1a obtained as described above.

In addition, the electrically peelable pressure sensitive adhesive sheet 1c may be fabricated by directly coating the release-treated face of the release sheet 4 with the above-described aqueous dispersion of the pressure sensitive adhesive composition to form the pressure sensitive adhesive layer 3, and then bonding the pressure sensitive adhesive layer 3 and the substrate 2 together.

The electrically peelable pressure sensitive adhesive sheet 1d having a configuration in which the pressure sensitive adhesive layer 3 is sandwiched between two release sheets 4 and 4' without using a substrate as shown in Fig. 1 (d) can be fabricated, for example, by directly coating the release-treated face of the release sheet 4 with the above-described aqueous dispersion of the pressure sensitive adhesive composition to form the pressure sensitive adhesive layer 3, and then laminating another release sheet 4' on the face of this pressure sensitive adhesive layer 3.

As described above, the release sheet 4 and the release sheet 4' are preferably adjusted so that the peel strength is different.

[Method for Using Electrically Peelable Pressure Sensitive Adhesive Sheet]

The electrically peelable pressure sensitive adhesive sheet of the present invention can be used by sticking it to any adherend.

The adherend is not particularly limited and may or may not have electrical conductivity but is preferably an adherend having electrical conductivity so that the adherend is an electrode as it is, from the viewpoint that the application of a voltage to the pressure sensitive adhesive faces is easy.

Therefore, from the above viewpoint, the method for using the electrically peelable pressure sensitive adhesive sheet of the present invention is preferably a method of using the pressure sensitive adhesive sheet of the present invention by sticking it to an adherend having electrical conductivity.

Examples of the adherend having electrical conductivity include adherends comprising metals such as aluminum, tin-doped indium oxide, copper, iron, silver, platinum, and gold, alloys of these metals, or the like.

[Examples]

The present invention will be specifically described below by the following Examples, but the present invention is not limited to the following Examples.

In addition, for the following physical property values of components used in the following Synthesis Examples, Examples, and Comparative Examples, values measured based on the methods shown below were used.

<Average Particle Diameter of Emulsion of Acrylic Copolymer>

The value obtained by measuring the median diameter based on volume at 25°C using a dynamic light scattering type particle size distribution measuring apparatus (manufactured by HORIBA, Ltd., product name "LB-550") was used (unit: nm).

< Concentration of Active Ingredient of Emulsion Type Acrylic Pressure Sensitive Adhesive>

According to JIS K-6833, an emulsion type acrylic pressure sensitive adhesive was dried at 107°C for 3 hours, then the residue was weighed, and the concentration of active ingredient was calculated by the following formula: • concentration of active ingredient (% by mass) = (the mass of the residue)/(the mass of the emulsion type acrylic pressure sensitive adhesive before drying) × 100

<Number Average Molecular Weight (Mn) of (Poly)alkylene Polyol>

Measurement was performed under the following conditions using a gel permeation chromatograph apparatus (manufactured by Tosoh Corporation, product name "HLC-8020"), and the value measured in terms of standard polystyrene was used.

(Measurement Conditions)

- Columns: "TSK guard column HXL-L," "TSK gel G2500HXL," "TSK gel G2000HXL," and "TSK gel G1000HXL" (all manufactured by Tosoh Corporation)
- Column temperature: 40°C
- Developing solvent: tetrahydrofuran
- Flow velocity: 1.0 mL/min

Synthesis Example 1

(Preparation of Emulsion Type Acrylic Pressure Sensitive Adhesive (A-1))

A mixture comprising 75 parts by mass of 2-ethylhexyl acrylate, 15 parts by mass of methyl acrylate, 7.5 parts by mass of methyl methacrylate, 1.5 parts by mass of acrylic acid, and 1.0 part by mass of diacetone acrylamide as a monomer mixture, and 8 parts by mass of a rosin ester resin (manufactured by Arakawa Chemical Industries, Ltd., product name "Super ester A-100," softening point 100°C) as a tackifying resin were introduced into a reaction container equipped with a stirrer, a reflux condenser, a thermometer, a nitrogen introduction tube, and a dropping funnel, and stirred for 30 minutes for dissolution while being kept at about 30°C.

After the above components were homogeneously dissolved, a dispersion obtained by dispersing 2.0 parts by mass of an anionic reactive emulsifier (manufactured by ADEKA, product name "ADEKA REASOAP SR-10," a compound represented by the above formula (10) (X is a group represented by $SO_3NH_4$)) in 57 parts by mass of deionized water was added at about 30°C, and the mixture was stirred for 30 minutes to obtain an emulsion (1).

In addition, separately, a reaction container equipped with a stirrer, a reflux condenser, a thermometer, a nitrogen introduction tube, and a dropping funnel was charged with 40 parts by mass of deionized water and 0.2 parts by mass of an anionic reactive emulsifier (manufactured by ADEKA, product name "ADEKA REASOAP SR-10"), and nitrogen was flowed in. The temperature in the reaction container was increased to 80°C, and 4 parts by mass of a 5% by mass aqueous solution of potassium persulfate was added into the reaction container.

Then, while the temperature in this reaction container was maintained at 80 to 83°C, the emulsion (1) prepared as described above and 4 parts by mass of a 5% by mass aqueous solution of potassium persulfate were simultaneously dropped into the reaction container over 3 hours, and emulsion polymerization was performed with stirring.

After the completion of the dropping followed by aging at a temperature of 80 to 83°C for 3 hours and then cooling to room temperature (25°C), 25% by mass ammonia water was added to adjust the pH to 7.5 to obtain an aqueous dispersion comprising an emulsion of an acrylic copolymer (1) having an average particle diameter of 180 nm.

Then, 8 parts by mass (active ingredient ratio) of adipic acid dihydrazide (manufactured by JAPAN FINECHEM COMPANY, INC., product name "ADH") as a cross-linking agent and 0.5 parts by mass of an anionic surfactant (manufactured by ADEKA, product name "ADEKA COL EC-4500") as a wetting agent were further added based on 100 parts by mass of active ingredient of the obtained aqueous dispersion comprising the emulsion of the acrylic copolymer (1), and they were mixed to obtain a solution of an emulsion type acrylic pressure sensitive adhesive (A-1) having an concentration of active ingredient of 50.5% by mass.

Synthesis Example 2

(Preparation of Emulsion Type Acrylic Pressure Sensitive Adhesive (A-2))

A reaction container equipped with a stirrer, a thermometer, a reflux condenser, and a dropping funnel was charged with 40 parts by mass of ion-exchanged water and 0.2 parts by mass of an anionic reactive surfactant ("AQUALON KH-10" manufactured by DKS Co. Ltd., a compound represented by the above formula (9) (X is $SO_3NH_4$)), and the temperature was increased to 80°C.

Next, a solution obtained by emulsifying and dispersing 80 parts by mass of 2-ethylhexyl acrylate, 16 parts by mass of methyl methacrylate, 2 parts by mass of acrylic acid, 2 parts by mass of methacrylic acid, and 0.2 parts by mass of γ-methacryloxypropyltrimethoxysilane ("Silicone KBM-503" manufactured by Shin-Etsu Chemical Co., Ltd.) as a monomer mixture, 0.03 parts by mass of dodecyl mercaptan as chain transfer agent, and 1.0 part by mass of a radical polymerizable surfactant (manufactured by DKS Co. Ltd., product name "AQUALON HS-10") in 49 parts by mass of ion-exchanged water, and a polymerization initiator obtained by dissolving 0.3 parts by mass of potassium persulfate in 9.7 parts by mass of ion-exchanged water were mixed. This mixed solution was supplied into the above reaction container from the dropping funnel over 3 hours, and emulsion polymerization was performed at 80°C to obtain an emulsion (2).

After the completion of the dropping followed by aging at 80°C for 2 hours and then cooling to room temperature (25°C), 25% by mass ammonia water was added to adjust the pH to 7.5 to obtain an aqueous dispersion comprising an emulsion of an acrylic copolymer (2) having an average particle diameter of 150 nm.

Then, 2 parts by mass of a silicone-based antifoaming agent (manufactured by BYK, product name "BYK025") as an antifoaming agent and 0.3 parts by mass of a urethane-based thickening agent (manufactured by Rohm and Haas, product name "EXP300") as a thickening agent were further added based on 100 parts by mass of active ingredient of the obtained aqueous dispersion comprising the emulsion of the acrylic copolymer (2), and they were mixed to obtain a solution of an emulsion type acrylic pressure sensitive adhesive (A-2) having an concentration of active ingredient of 50.5% by mass.

Examples 1 to 16 and Comparative Examples 1 to 7

An (poly)alkylene polyol of a type, a number average molecular weight (Mn), and an amount blended shown in Table 1 was added to 100 parts by mass of the emulsion type acrylic pressure sensitive adhesive (A-1) or (A-2) obtained in Synthesis Example 1 or 2, and deionized water was further added for concentration adjustment to prepare a coating liquid of an electrically peelable pressure sensitive adhesive composition having an concentration of active ingredient of 37% by mass.

Next, the release-treated face of a release sheet (manufactured by LINTEC Corporation, product name "SP-PET381130," thickness: 38 μm, a polyethylene terephthalate film whose surface was silicone release-treated) was coated with the coating liquid of the electrically peelable pressure sensitive adhesive composition prepared as described above so that the thickness after drying was 50 μm, and the coating liquid was dried at 100°C for 120 seconds to form a pressure sensitive adhesive layer on the release sheet.

Then, an aluminum foil substrate (manufactured by NIPPON METAL FOIL CO., LTD., product name "Arumitantai S Tsuya 50 Fukuoka," thickness: 50 μm) as a substrate was stuck on the face of the formed pressure sensitive adhesive layer to fabricate an electrically peelable pressure sensitive adhesive sheet of a substrate-attached type having the same configuration as the electrically peelable pressure sensitive adhesive sheet 1c shown in (c) of Fig. 1.

Using the fabricated electrically peelable pressure sensitive adhesive sheet, physical property values were measured based on the following methods. The results are shown in Table 1.

(1) Water Content of Pressure Sensitive Adhesive Layer

Each of the electrically peelable pressure sensitive adhesive sheets fabricated in the Examples and the Comparative Examples was cut to a size of 50 mm × 20 mm and allowed to stand in an environment of 23°C and 50% RH (relative humidity) for 24 hours.

After the standing, the release sheet of the cut pressure sensitive adhesive sheet was peeled to provide the pressure sensitive adhesive sheet comprising the aluminum foil substrate and the pressure sensitive adhesive layer, and the value of the water content of the pressure sensitive adhesive sheet was measured using a Karl Fischer moisture meter (manufactured by Kyoto Electronics Manufacturing Co., Ltd., apparatus name "MKC-510N"). The set heating temperature in the measurement was 230°C, and for the reagents, "Coulomat AG-Oven (manufactured by Riedel-de Haen)" and "Coulomat CG (manufactured by Riedel-de Haen)" were used as a generation liquid and as a counter electrode liquid, respectively.

In addition, after the water content of the aluminum foil substrate alone was also separately measured, the value obtained by excluding the water content of the aluminum foil substrate alone from the measured value of the water content of the pressure sensitive adhesive sheet comprising the aluminum foil substrate and the pressure sensitive adhesive layer was taken as the water content of the pressure sensitive adhesive layer and is described in Table 1.

(2) Adhesion of Pressure Sensitive Adhesive Sheet before Voltage Application

Each of the electrically peelable pressure sensitive adhesive sheets fabricated in the Examples and the Comparative Examples was cut to a size of 25 mm × 300 mm, and in an environment of 23°C and 50% RH (relative humidity), the release sheet was peeled, and the appearing pressure sensitive adhesive layer was stuck to an aluminum plate (manufactured by Paltec Test Panels Co., Ltd., product name "A1050P," 150 mm × 70 mm × 1 mm), an adherend. In the sticking, a roller having a weight of 2 kg was reciprocated once to pressure-bond the pressure sensitive adhesive sheet to the adherend. The pressure sensitive adhesive sheet stuck to the adherend was allowed to stand in an environment of 23°C and 50% RH (relative humidity) for 24 hours after the sticking to fabricate an adhesion measurement sample.

Then, the pressure sensitive adhesive sheet was peeled in an environment of 23°C and 50% RH (relative humidity) under the conditions of a peel rate of 300 mm/min and a peel angle of 180° using a tensile tester (manufactured by ORIENTEC CO., LTD., product name "TENSILON"), and the value (unit: N/25 mm) measured at this time was taken as the adhesion of the pressure sensitive adhesive sheet before voltage application.

(3) Adhesion of Pressure Sensitive Adhesive Sheet after Voltage Application

For the above-described adhesion measurement sample, as shown in (a) of Fig. 2, a voltage application apparatus 50 (manufactured by Takasago Ltd., product name "KH-100H") was used, a positive electrode terminal 51 was connected to an aluminum foil substrate 2a, a negative electrode terminal 52 was connected to an adherend 11, and a voltage of 100 V was applied for 60 seconds.

After the voltage application, the adhesion measurement sample was allowed to stand for 30 seconds. Then, the pressure sensitive adhesive sheet was peeled in the same environment of 23°C and 50% RH (relative humidity) under the conditions of a peel rate of 300 mm/min and a peel angle of 180° using a tensile tester (manufactured by ORIENTEC CO., LTD., trade name "TENSILON"), and the value (unit: N/25 mm) measured at this time was taken as the adhesion of the pressure sensitive adhesive sheet after voltage application.

The adhesion decrease rate in Table 1 is a value calculated by the following formula:

$$[\text{the decrease rate of adhesion (\%)}] = 100 - [\text{the adhesion of the pressure sensitive adhesive sheet after voltage application}]/[\text{the adhesion of the pressure sensitive adhesive sheet before voltage application}] \times 100$$

Table 1

| | Emulsion type acrylic pressure sensitive adhesive | | (Poly)alkylene polyol | | | Water content (%) | Adhesion before voltage application (N/25mm) | Adhesion after voltage application (N/25mm) | Adhesion decrease rate (%) |
|---|---|---|---|---|---|---|---|---|---|
| | Type*1 | Amount blended (parts by mass*2) | Type | Mn | Amount blended (parts by mass*2) | | | | |
| Example 1 | A-1 | 100 | Polyethylene glycol | 400 | 10 | 0.92 | 8.95 | 0.45 | 95.0 |
| Example 2 | A-1 | 100 | Polyethylene glycol | 200 | 10 | 1.11 | 10.1 | 1.0 | 90.1 |
| Example 3 | A-1 | 100 | Polyethylene glycol | 600 | 10 | 0.75 | 10.1 | 0.5 | 95.0 |
| Example 4 | A-1 | 100 | Polyethylene glycol | 1450 | 10 | 0.57 | 11.9 | 1.1 | 90.8 |
| Example 5 | A-1 | 100 | Polyethylene glycol | 400 | 4 | 0.54 | 9.2 | 6.4 | 30.4 |
| Example 6 | A-1 | 100 | Polyethylene glycol | 400 | 6 | 0.55 | 11.5 | 3.4 | 70.7 |
| Example 7 | A-1 | 100 | Polyethylene glycol | 400 | 12 | 1.09 | 10.0 | 1.0 | 90.0 |
| Example 8 | A-1 | 100 | Polyethylene glycol | 400 | 18 | 1.63 | 9.0 | 0.3 | 964 |
| Example 9 | A-1 | 100 | Polyethylene glycol | 400 | 24 | 1.62 | 8.8 | 0.1 | 99.3 |
| Example 10 | A-1 | 100 | Polyethylene glycol | 400 | 30 | 1.76 | 9.5 | 0.1 | 98.7 |
| Example 11 | A-1 | 100 | Ethylene glycol | 62 | 10 | 1.42 | 8.7 | 1.0 | 88.5 |
| Example 12 | A-1 | 100 | Triethylene glycol | 150 | 10 | 1.38 | 10.0 | 0.7 | 93.0 |
| Example 13 | A-1 | 100 | Propylene glycol | 76 | 10 | 0.88 | 9.6 | 1.4 | 85.4 |
| Example 14 | A-1 | 100 | Glycerin | 92 | 10 | 2.57 | 10.4 | 6.6 | 36.5 |

(continued)

| | Emulsion type acrylic pressure sensitive adhesive | | (Poly)alkylene polyol | | | Water content (%) | Adhesion before voltage application (N/25mm) | Adhesion after voltage application (N/25mm) | Adhesion decrease rate (%) |
|---|---|---|---|---|---|---|---|---|---|
| | Type*1 | Amount blended (parts by mass*2) | Type | Mn | Amount blended (parts by mass*2) | | | | |
| Example 15 | A-2 | 100 | Polyethylene glycol | 400 | 10 | 0.79 | 7.4 | 0.02 | 99.8 |
| Example 16 | A-2 | 100 | Polyethylene glycol | 400 | 20 | 0.96 | 6.6 | 0.06 | 99.2 |
| Comparative Example 1 | A-1 | 100 | - | - | 0 | 0.30 | 10.3 | 10.5 | -2.4 |
| Comparative Example 2 | A-1 | 100 | Polyethylene glycol | 400 | 1 | 0.50 | 9.1 | 8.5 | 6.6 |
| Comparative Example 3 | A-1 | 100 | Polyethylene glycol | 400 | 2 | 0.51 | 8.6 | 8.4 | 2.3 |
| Comparative Example 4 | A-1 | 100 | Polyethylene glycol | 400 | 3 | 0.51 | 9.1 | 9.0 | 1.1 |
| Comparative Example 5 | A-1 | 100 | Polyethylene glycol | 2240 | 10 | 0.41 | 12.2 | 11.4 | 6.6 |
| Comparative Example 6 | A-1 | 100 | Polypropylene glycol | 3100 | 10 | 0.44 | 9.2 | 9.2 | 0.0 |
| Comparative Example 7 | A-1 | 100 | Polypropylene glycol | 4000 | 10 | 0.43 | 11.0 | 10.3 | 6.4 |

*1: A-1: an emulsion type acrylic pressure sensitive adhesive prepared in Synthesis Example 1, A-2: an emulsion type acrylic pressure sensitive adhesive prepared in Synthesis Example 2
*2: Active ingredient ratio

According to Table 1, it is seen that the electrically peelable pressure sensitive adhesive sheets of Examples 1 to 16 have low adhesion after voltage application and a high decrease rate of adhesion due to voltage application. It was confirmed that for the electrically peelable pressure sensitive adhesive sheets of Examples 1 to 16, as shown in (b) of Fig. 2, after voltage application, the pressure sensitive adhesive layer was peeled from the negative electrode side.

On the other hand, the electrically peelable pressure sensitive adhesive sheets of Comparative Examples 1 to 4 have a pressure sensitive adhesive layer formed of a pressure sensitive adhesive composition having a low (poly)alkylene polyol content, and therefore, the result was that, for example, compared with the pressure sensitive adhesive sheet of Example 5, the adhesion after voltage application was high, and a decrease in adhesion before and after voltage application was not much seen.

In addition, the electrically peelable pressure sensitive adhesive sheets of Comparative Examples 5 to 7 have a pressure sensitive adhesive layer formed of a pressure sensitive adhesive composition using a (poly)alkylene polyol having a number average molecular weight of more than 2000, and therefore, the result was that, for example, compared with the pressure sensitive adhesive sheet of Example 4, the adhesion after voltage application was high, and a decrease in adhesion before and after voltage application was not much seen.

[Industrial Applicability]

The electrically peelable pressure sensitive adhesive sheet of the present invention can achieve both excellent adhesion and electrical peelability. Therefore, the electrically peelable pressure sensitive adhesive sheet of the present invention is preferred, for example, for applications such as surface protection films, masking tapes for coating or for decoration, peelable notes, and for the temporary fixing of industrial products.

[Reference Signs List]

1a, 1b, 1c, 1d electrically peelable pressure sensitive adhesive sheet 2 substrate
2a aluminum foil substrate
3, 3' pressure sensitive adhesive layer
3a, 3a' face of pressure sensitive adhesive layer connected to negative electrode side
4, 4' release sheet
11 adherend
50 voltage application apparatus
51 positive electrode terminal
52 negative electrode terminal

**Claims**

1. An electrically peelable pressure sensitive adhesive composition consisting of an emulsion type acrylic pressure sensitive adhesive (A) comprising an_ aqueous dispersion comprising an emulsion of an acrylic polymer (A1) obtained by emulsion polymerization in the presence of a surfactant using a monomer mixture comprising an alkyl (meth)acrylate, and a (poly)alkylene polyol (B) having a number average molecular weight of 2000 or less, wherein the number average molecular weight is measured by a gel permeation chromatograph apparatus and the value measured in terms of standard polystyrene is used, wherein a content of the component (B) is 3.5 parts by mass or more based on 100 parts by mass of active ingredient of the component(A).

2. The electrically peelable pressure sensitive adhesive composition according to claim 1, wherein the average particle diameter of the emulsion of the polymer (A1) is preferably 100 to 900 nm, which is measured at 25°C by a dynamic light scattering type particle size distribution measuring apparatus.

3. The electrically peelable pressure sensitive adhesive composition according to claim 1, wherein the content of the component (B) is 3.5 to 50 parts by mass based on 100 parts by mass of active ingredient of the component(A).

4. The electrically peelable pressure sensitive adhesive composition according to claim 1, wherein the component (B) comprises a (poly)alkylene glycol.

5. The electrically peelable pressure sensitive adhesive composition according to claim 4, wherein the (poly)alkylene

glycol is a compound represented by the following general formula (b-1):

$$HO-(EO)_p-(PO)_q-H \qquad (b\text{-}1)$$

wherein EO represents ethylene oxide, PO represents propylene oxide, and p and q are real numbers satisfying $p \geq 0$, $q \geq 0$, and $p + q \geq 1$; and when the compound represented by general formula (b-1) is a copolymer of EO and PO, the compound may be a compound formed by block copolymerization or a compound formed by random copolymerization.

6. The electrically peelable pressure sensitive adhesive composition according to any of claims 1 to 5, wherein the component (A1) is an acrylic copolymer comprising 60 to 99.9% by mass of a constituent unit (a1) derived from an alkyl (meth)acrylate, and 0.1 to 40% by mass of a constituent unit (a2) derived from a functional group-containing unsaturated monomer.

7. The electrically peelable pressure sensitive adhesive composition according to any of claims 1 to 5, wherein the surfactant is an anionic reactive emulsifier.

8. The electrically peelable pressure sensitive adhesive composition according to claim 7, wherein the anionic reactive emulsifier is an ammonium salt.

9. An electrically peelable pressure sensitive adhesive sheet comprising a pressure sensitive adhesive layer formed of a material comprising the electrically peelable pressure sensitive adhesive composition according to any of claims 1 to 5.

10. The electrically peelable pressure sensitive adhesive sheet according to claim 9, wherein a water content of the pressure sensitive adhesive layer measured by Karl Fischer method is 0.53 to 15.0%.

11. The electrically peelable pressure sensitive adhesive sheet according to claim 9, comprising the pressure sensitive adhesive layer on at least one face of an electrically conductive substrate.

12. The electrically peelable pressure sensitive adhesive sheet according to claim 9, having a configuration in which the pressure sensitive adhesive layer is sandwiched between two release sheets.

13. The electrically peelable pressure sensitive adhesive sheet according to claim 9, wherein when a voltage is applied between faces on both sides of the pressure sensitive adhesive layer sandwiched between two adherends or an adherend and a substrate, peeling occurs between a face of the pressure sensitive adhesive layer connected to a cathode side and the adherend or the substrate in contact with the face.

14. A method for using an electrically peelable pressure sensitive adhesive sheet, comprising sticking the electrically peelable pressure sensitive adhesive sheet according to claim 9 to an adherend having electrical conductivity.

**Patentansprüche**

1. Eine elektrisch abziehbare druckempfindliche Haftzusammensetzung, die aus einem druckempfindlichen Acrylklebstoff des Emulsionstyps (A) besteht, der eine wässrige Dispersion umfasst, die eine Emulsion eines Acrylpolymers (A1) umfasst, das durch Emulsionspolymerisation in der Gegenwart eines Tensids unter Verwendung eines Monomerengemisches, das ein Alkyl(meth)acrylat, und ein (Poly)alkylenpolyol (B) mit einem zahlenmittleren Molekulargewicht von 2000 oder weniger umfasst, wobei das zahlenmittlere Molekulargewicht mit einer Gelpermeationschromatographievorrichtung gemessen wird und der Wert bezüglich eines Polystyrolstandards verwendet wird, erhalten wird, wobei der Gehalt der Komponente (B) 3,5 Gewichtsteile oder mehr bezogen auf 100 Gewichtsteile des aktiven Bestandteils der Komponente (A) beträgt.

2. Die elektrisch abziehbare druckempfindliche Haftzusammensetzung gemäß Anspruch 1, wobei der mittlere Teilchendurchmesser der Emulsion des Polymers (A1) bevorzugt 100 bis 900 nm beträgt, welcher bei 25 °C mit einer

Teilchengrößeverteilungsmessungsvorrichtung nach Art der Dynamischen Lichtstreuung gemessen wird.

3. Die elektrisch abziehbare druckempfindliche Haftzusammensetzung gemäß Anspruch 1, wobei der Gehalt der Komponente (B) 3,5 bis 50 Gewichtsteile bezogen auf 100 Gewichtsteile des aktiven Bestandteils der Komponente (A) beträgt.

4. Die elektrisch abziehbare druckempfindliche Haftzusammensetzung gemäß Anspruch 1, wobei die Komponente (B) ein (Poly)alkylenglycol umfasst.

5. Die elektrisch abziehbare druckempfindliche Haftzusammensetzung gemäß Anspruch 4, wobei das (Poly)alkylenglycol eine Verbindung ist, die durch die folgende allgemeine Formel (b-1) wiedergegeben wird:

$$HO{-}(EO)_p{-}(PO)_q{-}H \qquad (b\text{-}1)$$

worin EO Ethylenoxid darstellt, PO Propylenoxid darstellt, und p und q reale Zahlen sind, die $p \geq 0$, $q \geq 0$, und $p + q \geq 1$ genügen; und, wenn die durch die allgemeine Formel (b-1) dargestellte Verbindung ein Copolymer von EO und PO ist, die Verbindung eine durch Blockcopolymerisation gebildete Verbindung sein kann, oder eine durch Random-Copolymerisation gebildete Verbindung sein kann.

6. Die elektrisch abziehbare druckempfindliche Haftzusammensetzung gemäß einem der Ansprüche 1 bis 5, wobei die Komponente (A1) ein Acrylcopolymer ist, das 60 bis 99,9 Gewichts-% eines Bausteins (a1), der von Alkyl(meth)acrylat abgeleitet ist, und 0,1 bis 40 Gewichts-% eines Bausteins (a2), der von einem eine funktionelle Gruppe enthaltenden ungesättigten Monomer abgeleitet ist, umfasst.

7. Die elektrisch abziehbare druckempfindliche Haftzusammensetzung gemäß einem der Ansprüche 1 bis 5, wobei das Tensid ein anionischer reaktiver Emulgator ist.

8. Die elektrisch abziehbare druckempfindliche Haftzusammensetzung gemäß Anspruch 7, wobei es sich bei dem anionischen reaktiven Emulgator um ein Ammoniumsalz handelt.

9. Eine elektrisch abziehbare druckempfindliche Klebefolie, die eine druckempfindliche Haftschicht umfasst, die aus einem Material gebildet wird, das eine elektrisch abziehbare druckempfindliche Haftzusammensetzung gemäß einem der Ansprüche 1 bis 5 umfasst.

10. Die elektrisch abziehbare druckempfindliche Klebefolie gemäß Anspruch 9, wobei der Wassergehalt der druckempfindlichen Haftschicht gemessen nach dem Karl-Fischer-Verfahren 0,53 bis 15,0 % beträgt.

11. Die elektrisch abziehbare druckempfindliche Klebefolie gemäß Anspruch 9, die die druckempfindliche Haftschicht auf mindestens einer Seite eines elektrisch leitfähigen Substrates umfasst.

12. Die elektrisch abziehbare druckempfindliche Klebefolie gemäß Anspruch 9, die einen Aufbau aufweist, in dem die druckempfindliche Haftschicht Sandwich-artig zwischen zwei Freigabefolien eingeschlossen ist.

13. Die elektrisch abziehbare druckempfindliche Folie gemäß Anspruch 9, wobei sobald eine Spannung zwischen den Oberflächen auf beiden Seiten der druckempfindlichen Haftschicht, die Sandwich-artig zwischen zwei anhängenden Teilen oder einem anhängenden Teil und einem Substrat eingeschlossen ist, angelegt wird, Abschälung zwischen einer Oberfläche der druckempfindlichen Haftschicht, die mit der Kathodenseite verbunden ist, und dem anhängenden Teil oder dem Substrat in Verbindung mit dieser Oberfläche auftritt.

14. Ein Verfahren zur Verwendung einer elektrisch abziehbaren druckempfindlichen Klebefolie, das das Anheften der elektrisch abziehbaren druckempfindlichen Klebefolie gemäß Anspruch 9 an ein anhängendes Teil, das elektrische Leitfähigkeit aufweist, umfasst.

**Revendications**

1. Composition adhésive sensible à la pression électriquement décollable constituée d'un adhésif acrylique sensible à la pression de type émulsion (A) comprenant une dispersion aqueuse comprenant une émulsion d'un polymère acrylique (A1) obtenue par polymérisation en émulsion en présence d'un tensioactif en utilisant un mélange de monomères comprenant un (méth)acrylate d'alkyle, et un (poly)alkylène polyol (B) ayant un poids moléculaire moyen en nombre inférieur ou égal à 2000, où le poids moléculaire moyen en nombre est mesuré par un appareil de chromatographie par perméation de gel et la valeur mesurée en matière de polystyrène étalon est utilisée, où une teneur du composant (B) est supérieure ou égale à 3,5 parties en masse par rapport à 100 parties en masse du principe actif du composant (A).

2. Composition adhésive sensible à la pression électriquement décollable selon la revendication 1, dans laquelle le diamètre moyen de particules de l'émulsion du polymère (A1) est de préférence compris entre 100 et 900 nm, qui est mesuré à 25°C par un appareil de mesure de distribution granulométrique de type à diffusion dynamique de la lumière.

3. Composition adhésive sensible à la pression électriquement décollable selon la revendication 1, dans laquelle la teneur du composant (B) est comprise entre 3,5 et 50 partie(s) en masse par rapport à 100 parties en masse du principe actif du composant (A).

4. Composition adhésive sensible à la pression électriquement décollable selon la revendication 1, dans laquelle le composant (B) comprend un (poly)alkylène glycol.

5. Composition adhésive sensible à la pression électriquement décollable selon la revendication 4, dans laquelle le (poly)alkylène glycol est un composé représenté par la formule générale (b-1) suivante :

$$HO-(EO)_p-(PO)_q-H \qquad (b\text{-}1)$$

dans laquelle EO représente l'oxyde d'éthylène, PO représente l'oxyde de propylène, et p et q sont des nombres réels satisfaisant $p \geq 0$, $q \geq 0$, et $p + q \geq 1$ ; et lorsque le composé représenté par la formule générale (b-1) est un copolymère de EO et PO, le composé peut être un composé formé par une copolymérisation séquencée ou un composé formé par une copolymérisation aléatoire.

6. Composition adhésive sensible à la pression électriquement décollable selon l'une des revendications 1 à 5, dans laquelle le composant (A1) est un copolymère acrylique comprenant 60 à 99,9% en masse d'une unité constitutive (a1) dérivée d'un (méth)acrylate d'alkyle, et 0,1 à 40% en masse d'une unité constitutive (a2) dérivée d'un monomère insaturé contenant un groupe fonctionnel.

7. Composition adhésive sensible à la pression électriquement décollable selon l'une des revendications 1 à 5, dans laquelle le tensioactif est un émulsifiant réactif anionique.

8. Composition adhésive sensible à la pression électriquement décollable selon la revendication 7, dans laquelle l'émulsifiant réactif anionique est un sel d'ammonium.

9. Feuille adhésive sensible à la pression électriquement décollable comprenant une couche adhésive sensible à la pression formée d'un matériau comprenant la composition adhésive sensible à la pression électriquement décollable selon l'une des revendications 1 à 5.

10. Feuille adhésive sensible à la pression électriquement décollable selon la revendication 9, dans laquelle la teneur en eau de la couche adhésive sensible à la pression mesurée par le procédé de Karl Fischer est comprise entre 0,53 et 15,0%.

11. Feuille adhésive sensible à la pression électriquement décollable selon la revendication 9, comprenant la couche adhésive sensible à la pression sur au moins une face d'un substrat électroconducteur.

12. Feuille adhésive sensible à la pression électriquement décollable selon la revendication 9, ayant une configuration

où la couche adhésive sensible à la pression est prise en tenaille entre deux feuilles antiadhésives.

**13.** Feuille adhésive sensible à la pression électriquement décollable selon la revendication 9, dans laquelle lorsqu'une tension est appliquée entre les faces des deux côtés de la couche adhésive sensible à la pression prise en tenaille entre deux parties adhérées ou une partie adhérée et un substrat, un décollement se produit entre une face de la couche adhésive sensible à la pression reliée à un côté cathode et la partie adhérée ou le substrat en contact avec la face.

**14.** Procédé d'utilisation d'une feuille adhésive sensible à la pression électriquement décollable, comprenant le collage de la feuille adhésive sensible à la pression électriquement décollable selon la revendication 9 sur une partie adhérée ayant une conductivité électrique.

FIG.1

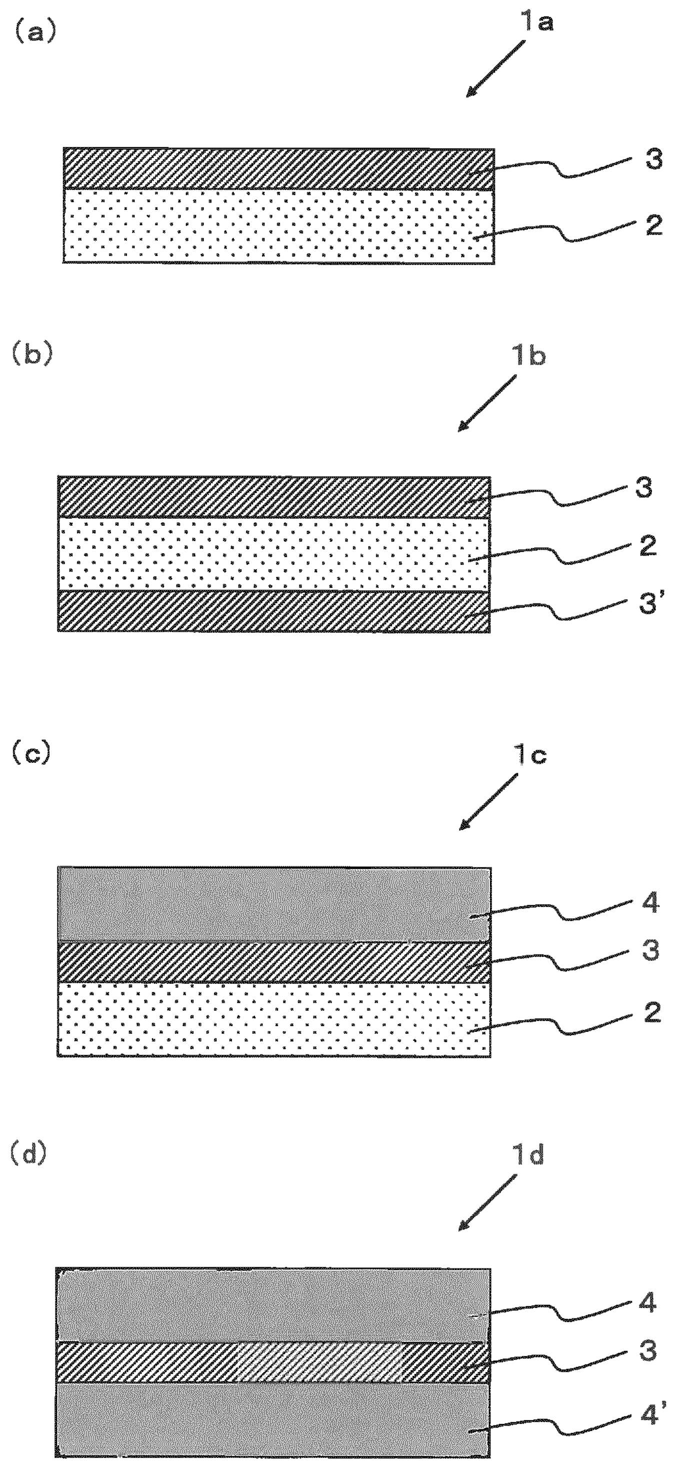

FIG.2

(a)

(b)

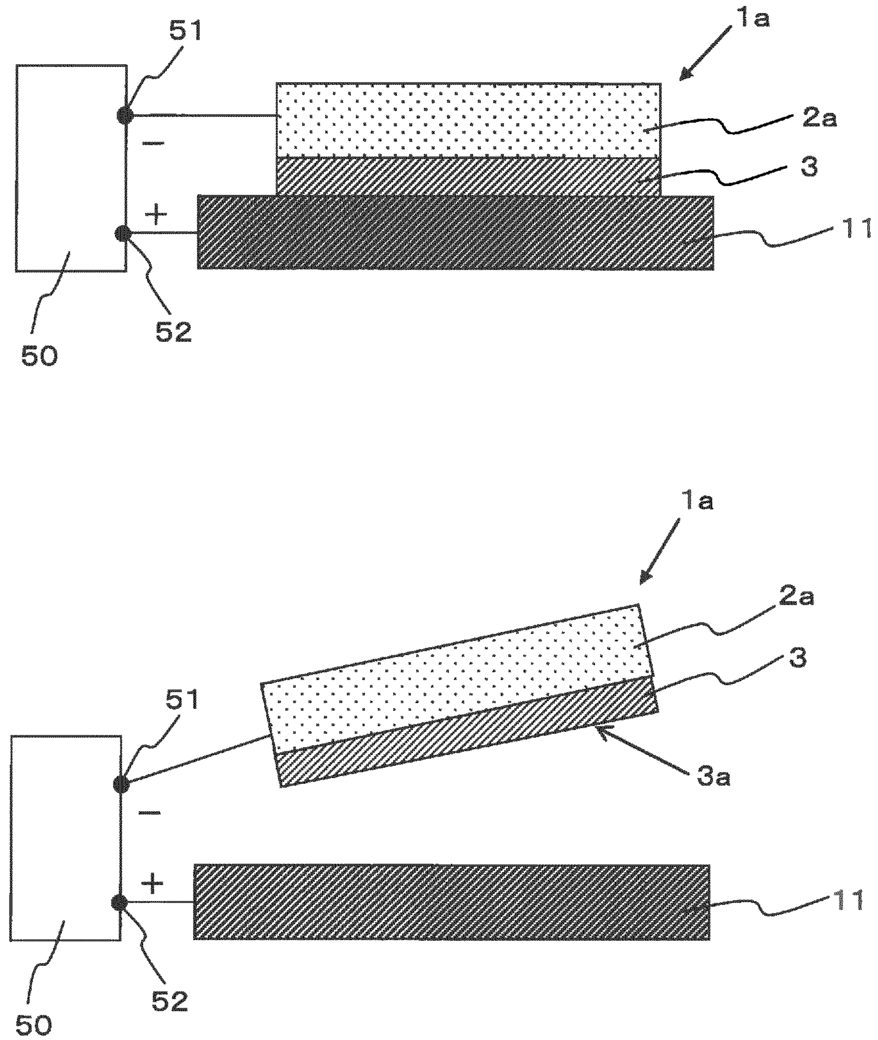

FIG.3

(a)

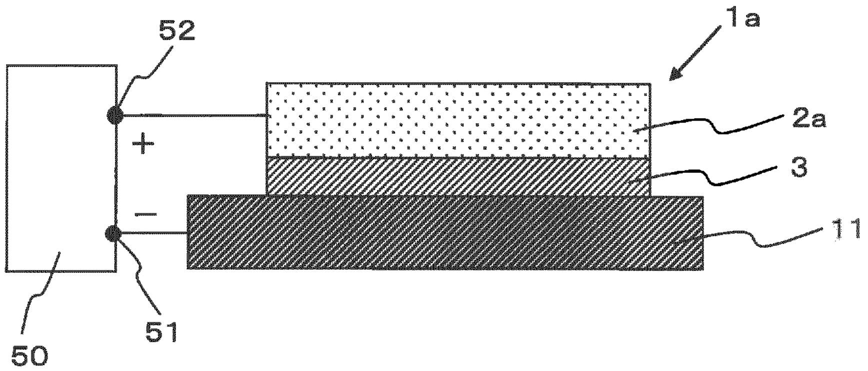


(b)

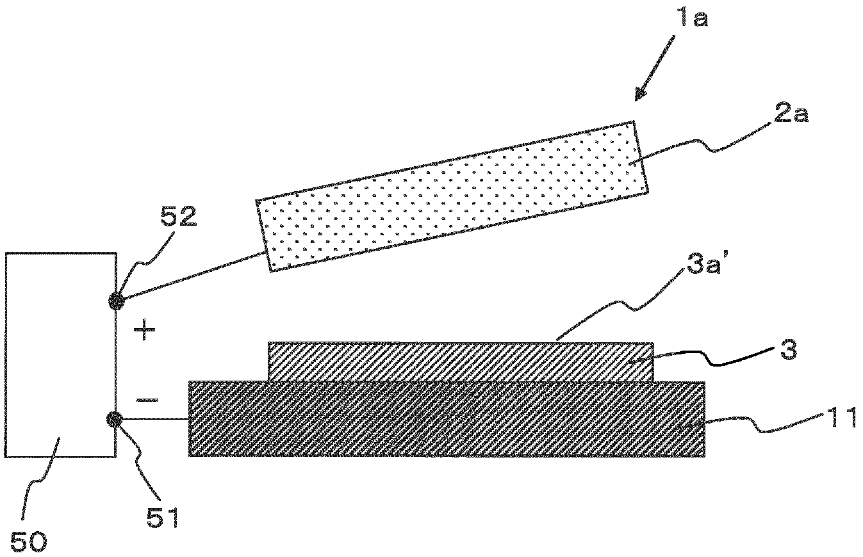

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003129030 A
- WO 2007018239 A
- JP 2010037355 B